(19) Europäisches Patentamt
European Patent Office
Office européen des brevets

(11) EP 4 307 422 A1

(12) EUROPEAN PATENT APPLICATION
published in accordance with Art. 153(4) EPC

(43) Date of publication:
17.01.2024 Bulletin 2024/03

(51) International Patent Classification (IPC):
$H01M\ 10/0562^{(2010.01)}$   $H01M\ 10/052^{(2010.01)}$
$C01B\ 25/14^{(2006.01)}$

(21) Application number: 22916721.8

(22) Date of filing: 27.12.2022

(52) Cooperative Patent Classification (CPC):
C01B 25/14; H01M 10/052; H01M 10/0562;
Y02E 60/10

(86) International application number:
PCT/KR2022/021443

(87) International publication number:
WO 2023/128580 (06.07.2023 Gazette 2023/27)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 27.12.2021 JP 2021212766

(71) Applicant: LG Energy Solution, Ltd.
Seoul 07335 (KR)

(72) Inventors:
• NARIMATSU, Eiichiro
  Yokohama-shi, Kanagawa 220--0011 (JP)
• IKENOMOTO, Shun
  Yokohama-shi, Kanagawa 220--0011 (JP)
• MATSUBARA, Keiko
  Yokohama-shi, Kanagawa 220--0011 (JP)

(74) Representative: Goddar, Heinz J. et al
Boehmert & Boehmert
Anwaltspartnerschaft mbB
Pettenkoferstrasse 22
80336 München (DE)

(54) A SULFIDE BASED SOLID ELECTROLYTE AND A METHOD FOR MANUFACTURING THE SAME

(57)    Provided are a sulfide-based solid electrolyte having improved ion conductivity and a method for preparing the same. The sulfide-based solid electrolyte contains a Group 2 element, has an argyrodite-type crystal structure, is represented by the chemical formula of $Li_{7-x-2y}M_yPS_{6-x}Ha_x$ (wherein M represents at least one element selected from Group 2 elements, Ha is at least one element selected from halogen elements, Ha includes Br, and x and y satisfy the conditions of $0 < x < 2.5$ and $0 < y < 0.45$), and has a lattice volume of 950-980 $Å^3$.

FIG. 3

COMPOSITION DEPENDENCY OF ION CONDUCTIVITY IN EXAMPLES AND COMPARATIVE EXAMPLES

EP 4 307 422 A1

**Description**

TECHNICAL FIELD

The present application claims priority to Japanese Patent Application No. 2021-212766 filed on December 27, 2021. The present disclosure relates to a sulfide-based solid electrolyte and a method for preparing the same.

BACKGROUND ART

Development of solid-state batteries using a solid electrolyte substituting for a liquid electrolyte of lithium-ion batteries has been conducted in order to provide batteries with high safety, long service life and high energy density. Among many types of solid electrolytes, a sulfide-based solid electrolyte, such as $Li_{10}GeP_2Si_2$, has high ion conductivity close to the ion conductivity of a liquid electrolyte and is soft, and thus is advantageous in that it is easy to obtain close adhesive property to an active material. Therefore, commercialization of solid-state batteries using a sulfide-based solid electrolyte has been expected.

Since lithium metal can increase energy density per weight (Wh/kg) by virtue of its low weight per unit volume and high theoretical capacity, it has been given many attentions as a negative electrode material of a solid-state battery. However, a sulfide-based solid electrolyte, such as $Li_{10}GeP_2S_{12}$, has low stability to lithium metal, and thus is problematic in that it has a difficulty in using together with a lithium metal negative electrode.

To solve the problem, Patent Documents 1-3 disclose a sulfide-based solid electrolyte having an argyrodite-type crystal structure represented by the chemical formula of $Li_{7-x-2y}PS_{6-x-y}Cl_x$. Patent Document 4 discloses a sulfide-based solid electrolyte having improved stability to lithium metal by precisely controlling the composition of a sulfide-based solid electrolyte having a crystal structure represented by $Li_{10}GeP_2S_{12}$.

However, according to the related art, there is a problem in that the sulfide-based solid electrolytes have low ion conductivity.

[References]

[Patent Documents]

Patent Document 1: Japanese Patent Publication No. 5873533
Patent Document 2: Japanese Patent Laid-Open No. 2018-45997
Patent Document 3: Japanese Patent Laid-Open No. 2018-203569
Patent Document 4: Japanese Patent Laid-Open No. 2016-27545

DISCLOSURE

Technical Problem

The present disclosure is designed to solve the problems of the related art, and therefore the present disclosure is directed to providing a sulfide-based solid electrolyte having improved ion conductivity and a method for preparing the same.

Technical Solution

In one aspect of the present disclosure, there is provided a sulfide-based solid electrolyte, which contains a Group 2 element, has an argyrodite-type crystal structure, is represented by the chemical formula of $Li_{7-x-2y}M_yPS_{6-x}Ha_x$ (wherein M represents at least one element selected from Group 2 elements, Ha is at least one element selected from halogen elements, Ha includes Br, and x and y satisfy the conditions of $0 < x < 2.5$ and $0 < y < 0.45$), and has a lattice volume of 950-980 Å$^3$.

According to an embodiment, y may satisfy the condition of $0 < y < 0.1$.

According to another embodiment, M may be at least one selected from the group consisting of Mg, Ca, Sr and Ba.

According to still another embodiment, M may be Ca.

According to still another embodiment, the sulfide-based solid electrolyte may have an ion conductivity of 2 mS/cm or more.

According to still another embodiment, the sulfide-based solid electrolyte may not include any impurity phase other than argyrodite phase.

According to still another embodiment, the sulfide-based solid electrolyte may have a lattice volume of 958-966 $\text{Å}^3$.

In another aspect of the present disclosure, there is provided a method for preparing the sulfide-based solid electrolyte as defined in any one of the above-described embodiments, including the steps of:

mixing lithium sulfide ($Li_2S$), diphosphorus pentasulfide ($P_2S_5$), lithium halide (LiHa) and a Group 2 element-containing sulfide to obtain a mixture; and
firing the mixture under inert atmosphere at a temperature of 250-600°C.

## Advantageous Effects

The present disclosure may provide a sulfide-based solid electrolyte having improved ion conductivity and a method for preparing the same.

## DESCRIPTION OF DRAWINGS

FIG. 1 shows the X-ray diffractometry (XRD) pattern of each of Examples 8, 12 and 19 and Comparative Example 1.
FIG. 2 shows the XRD pattern of each of Examples 2, 3, 10 and 11.
FIG. 3 is a graph illustrating the lithium-ion conductivity depending on the composition of a sulfide-based solid electrolyte.

## BEST MODE

Hereinafter, preferred embodiments of the present disclosure will be described in detail.

Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

[Solid Electrolyte for Solid-State Battery]

The solid electrolyte for a solid-state battery according to the present disclosure includes at least one of a sulfide-based solid electrolyte, an oxide-based solid electrolyte and a polymeric solid electrolyte. Preferably, the solid electrolyte for a solid-state battery according to the present disclosure is a sulfide-based solid electrolyte. The solid electrolyte for a solid-state battery may be incorporated to a positive electrode mixture and used as an ingredient of a positive electrode, may be incorporated to a negative electrode mixture and used as an ingredient of a negative electrode, or may be used as a separator. The solid electrolyte for a solid-state battery may further include additives, such as a lithium salt, a conductive material, a binder resin, or the like, depending on the particular use.

<Sulfide-Based Solid Electrolyte>

The sulfide-based solid electrolyte is not particularly limited, as long as it contains sulfur (S), and any known sulfide-based solid electrolyte may be used.

The sulfide-based solid electrolyte may have a crystal structure. The sulfide-based solid electrolyte having a crystal structure accelerates lithium-ion conduction to provide high lithium-ion conductivity.

The sulfide-based solid electrolyte may have an argyrodite type, NASICON type, perovskite type, garnet type or LiGePS type crystal structure. Preferably, the sulfide-based soldi electrolyte may have an argyrodite type crystal structure. The sulfide-based solid electrolyte having an argyrodite type crystal structure has high stability to lithium metal, and thus lithium metal having high energy density per weight may be used as a negative electrode material.

The sulfide-based solid electrolyte may be amorphous, vitreous or glass-ceramic.

The sulfide-based solid electrolyte may have ion conductivity of metal that belongs to Group 1 or Group 2 in the Periodic Table, and may include Li-P-S type glass or Li-P-S type glass-ceramic. Non-limiting examples of the sulfide-based solid electrolyte may include at least one selected from $Li_2S\text{-}P_2S_5$, $Li_2S\text{-}LiI\text{-}P_2S_5$, $Li_2S\text{-}LiI\text{-}Li_2O\text{-}P_2S_5$, $Li_2S\text{-}LiBr\text{-}P_2S_5$, $Li_2S\text{-}Li_2O\text{-}P_2S_5$, $Li_2S\text{-}Li_3PO_4\text{-}P_2S_5$, $Li_2S\text{-}P_2S_5\text{-}P_2O_5$, $Li_2S\text{-}P_2S_5\text{-}SiS_2$, $Li_2S\text{-}P_2S_5\text{-}SnS$, $Li_2S\text{-}P_2S_5\text{-}Al_2S_3$, $Li_2S\text{-}GeS_2$, and $Li_2S\text{-}GeS_2\text{-}ZnS$. However, the scope of the present disclosure is not particularly limited thereto.

The sulfide-based solid electrolyte may include a crystalline phase and an amorphous phase. The sulfide-based solid electrolyte may include a crystalline phase containing an argyrodite type crystal structure (also referred to as 'argyrodite phase' hereinafter) and the other phase (also referred to as 'impurity phase' or 'unknown phase' hereinafter). Preferably, the argyrodite type crystal structure is a cubic system. The other phase may include a $Li_2S$ phase, a $P_2S_5$ phase, a LiCl phase, a LiBr phase, a $Li_3PS_4$ phase, a MgS phase, a CaS phase, a SrS phase, a BaS phase, or the like, regardless of a crystalline phase or amorphous phase. Preferably, the sulfide-based solid electrolyte does not include or substantially does not include any impurity phase other than argyrodite phase. In other words, the sulfide-based solid electrolyte preferably includes argyrodite phase alone. When the sulfide-based solid electrolyte does not include or substantially does not include any impurity phase, lithium-ion conduction is hardly inhibited, and thus the sulfide-based solid electrolyte may have high lithium-ion conductivity.

The ratio of crystalline phase contained in the sulfide-based solid electrolyte may be evaluated quantitatively or semi-quantitatively from the X-ray diffractometry (XRD) pattern. According to an embodiment, the ratio of crystalline phase may be evaluated by comparing the peak intensity (height or area) of the XRD pattern.

According to an embodiment of the present disclosure, XRD may be carried out by using an X-ray diffractometer available from Bruker Corp. For example, XRD may be determined in a range of $2\theta°$ (10-89.5°) by using $CuK\alpha$ rays having a light source wavelength of 1.5406 Å. Meanwhile, the half width may be calculated from the crystal peak of (311) surface of the argyrodite crystal structure observed at around $2\theta = 30°$. For example, the half width may be calculated according to the following formula of Scherrer equation:

$$D(\text{Å}) = K*\lambda(\beta*\cos\theta),$$

wherein K is the Scherrer constant, $\lambda$ is a wavelength of X rays, $\beta$ is a half width, $\theta$ is a diffraction angle $2\theta/\theta$, and D is a crystallite size.

The sulfide-based solid electrolyte is represented by the chemical formula of $Li_{7-x-2y}M_yPS_{6-x}Ha_x$ (wherein M represents at least one element selected from Group 2 elements, Ha is at least one element selected from halogen elements, Ha includes Br, and x and y satisfy the conditions of $0 < x < 2.5$ and $0 < y < 0.45$), and has a lattice volume of 950-980 $\text{Å}^3$. Such a sulfide-based solid electrolyte may have high lithium-ion conductivity.

In the sulfide-based solid electrolyte, lithium in $Li_{7-x}PS_{6-x}Ha_x$ is partially substituted with a Group 2 element (M) capable of being converted into a divalent cation. The Group 2 element (M) substituting for lithium may be at least one selected from the group consisting of magnesium (Mg), calcium (Ca), strontium (Sr) and barium (Ba). Lithium (Li) has an ion radius (hexa-coordinated) of 90 pm, and magnesium (Mg), calcium (Ca), strontium (Sr) and barium (Ba) have an ion radius (hexa-coordinated) of 86 pm, 114 pm, 132 pm and 149 pm, respectively. Based on the valence number of element, two lithium elements may be substituted with one Group 2 element (M). A lithium site vacancy is generated through the substitution with a Group 2 element (M) to provide improved lithium-ion conductivity. In addition, the sulfide-based solid electrolyte undergoes a change in lattice constant and lattice volume through the substitution with a Group 2 element (M), and thus may have a crystal structure suitable for lithium-ion conduction.

Preferably, the Group 2 element is magnesium (Mg) and/or calcium (Ca), more preferably calcium (Ca). When the Group 2 element is magnesium (Mg) and/or calcium (Ca), the sulfide-based solid electrolyte may have high crystallinity, and thus may have high ion conductivity. It is thought that this is because the ion radius (90 pm) of lithium (Li) is close to the ion radii (86 pm and 114 pm) of magnesium (Mg) and calcium (Ca), and the argyrodite type crystal structure may be retained with ease even after the substitution with a Group 2 element (M).

The degree (y) of substitution with a Group 2 element (M) in the chemical formula of $Li_{7-x-2y}M_yPS_{6-x}Ha_x$ satisfies the condition of $0 < y < 0.45$, preferably $0 < y < 0.1$, more preferably $0.005 \leq y \leq 0.04$, and even more preferably $0.01 \leq y \leq 0.03$. When y satisfies the above-defined range, the sulfide-based solid electrolyte may have high ion conductivity. When y is 0, it is not possible to obtain a change in crystal structure derived from the substitution with a Group 2 element (M), resulting in low ion conductivity. When y is 0.45 or more, the sulfide-based solid electrolyte cannot retain the argyrodite type crystal structure, resulting in degradation of ion conductivity. In addition, the impurity phase inhibiting lithium-ion conductivity is increased in the sulfide-based solid electrolyte, resulting in degradation of ion conductivity.

The halogen (Ha) in the chemical formula of $Li_{7-x-2y}M_yPS_{6-x}Ha_x$ is at least one selected from halogen elements, and at least includes bromine (Br). Preferably, the halogen (Ha) includes chlorine (Cl) and bromine (Br). When sulfur (S) is a divalent anion, it shows stronger force of drawing lithium ion as compared to a monovalent halogen ion, and thus can inhibit lithium-ion movement significantly. When the halogen includes bromine (Br), a share of sulfur (S) in a specific site in the argyrodite type crystal structure is decreased and halogen is increased, and thus lithium-ion mobility may be activated around the bromine (Br) site. As a result, it is possible to improve lithium-ion conductivity. In addition, bromine (Br) is bound with Li in the sulfide-based solid electrolyte to form lithium bromide (LiBr), which is a water-absorbing substance. Lithium bromide (LiBr) absorbs water that may cause degradation of lithium-ion conductivity, thereby providing the sulfide-based solid electrolyte with improved lithium-ion conductivity.

The ratio (x) of halogen (Ha) in the chemical formula of $Li_{7-x-2y}M_yPS_{6-x}Ha_x$ satisfies the condition of $0 < x < 2.5$, preferably $1.0 < x < 2.0$, and more preferably $1.3 < x < 1.8$. When x satisfies the above-defined range, the argyrodite type crystal structure is stabilized, and thus the sulfide-based solid electrolyte may have high ion conductivity.

The ion conductivity of the sulfide-based solid electrolyte may be affected by the crystallinity thereof. The crystallinity may be evaluated from the XRD pattern. In the XRD pattern, when any phase (crystalline phase or amorphous phase, such as $Li_2S$ phase, $P_2S_5$ phase, LiCl phase, LiBr phase, $Li_3PS_4$ phase, MgS phase, CaS phase, SrS phase, BaS phase, or the like) other than argyrodite crystalline phase is not observed or is not substantially observed, the sulfide-based solid electrolyte may have high ion conductivity.

The lattice volume of the sulfide-based solid electrolyte may be reduced by the substitution of a lithium site with a Group 2 element (M). Although it is not bound to any specific theory, the Group 2 element (M) shows the properties of a divalent cation and has strong interaction with another anion present in the sulfide-based solid electrolyte, resulting in a decrease in lattice volume. Such a decrease in lattice volume results in a crystal structure suitable for lithium-ion conduction, and thus the sulfide-based solid electrolyte may have high ion conductivity.

The sulfide-based solid electrolyte may have a lattice volume of 950-980 $Å^3$, preferably 958-966 $Å^3$, more preferably 960-964 $Å^3$, and even more preferably 961-963 $Å^3$. The lattice constant and lattice volume may be evaluated from the XRD pattern. When the lattice volume satisfies the above-defined range, lithium-ion conduction in the sulfide-based solid electrolyte is accelerated, and thus the sulfide-based solid electrolyte may have high ion conductivity.

Unless otherwise stated, the ion conductivity (also referred to as 'lithium-ion conductivity' hereinafter) of the sulfide-based solid electrolyte refers to the ion conductivity thereof at room temperature (25°C, 298K) under ambient pressure (1 atm). In the case of the application to a solid-state battery, it is practically preferred that the ion conductivity is 4 mS/cm or more. The ion conductivity of the sulfide-based solid electrolyte according to an embodiment of the present disclosure is 2 mS/cm or more, preferably 4 mS/cm or more, more preferably 10.8 mS/cm or more, even more preferably 12 mS/cm or more, and most preferably 13 mS/cm or more.

The sulfide-based solid electrolyte according to an embodiment of the present disclosure may be obtained by the method including the steps of: mixing a lithium source, a Group 2 element source, a phosphorus source, a sulfur source and a halogen source to obtain a mixture; and firing the mixture under inert atmosphere, such as argon gas, nitrogen gas, or the like, at a temperature of 250-600°C.

Each of the lithium source, the Group 2 element source, the phosphorus source, the sulfur source and the halogen source may be a compound, such as sulfide, oxide, nitride, or the like. Lithium sulfide ($Li_2S$) may be used as a lithium source, diphosphorus pentasulfide ($P_2S_5$) may be used as a phosphorus source, and a lithium halide, such as chloride (LiCl), lithium bromide (LiBr), or the like, may be used as a halogen source. For example, the Group 2 element source may be a sulfide. Sulfur may be supplied from a source of another element. In other words, at least one of the lithium source, the Group 2 element source, the phosphorous source and the halogen source may also function as a sulfur source.

In the case of a sulfide-based solid electrolyte having an argyrodite type crystal structure, the firing temperature is preferably 400-550°C, more preferably 420-530°C, and even more preferably 450-500°C. When the firing temperature satisfies the above-defined range, the sulfide-based solid electrolyte may have high crystallinity. Therefore, it is possible to obtain a sulfide-based solid electrolyte having high ion conductivity.

[Solid State Battery]

The electrolyte for a solid-state battery according to the present disclosure may be used for a solid state-battery including a positive electrode, a negative electrode and a solid electrolyte membrane. The solid electrolyte for a solid-state battery may be used together with the active material in the electrode active material of each of the positive electrode and the negative electrode. The solid electrolyte for a solid-state battery may be used as an ingredient of the solid electrolyte membrane. The electrolyte for a solid-state battery may have an average particle diameter controlled depending on the particular use. It is possible to improve the ion conductivity by controlling the average particle diameter of the electrolyte for a solid-state battery.

<Solid Electrolyte Membrane>

According to the present disclosure, the solid electrolyte membrane may have a thickness of about 50 μm or less, preferably about 15-50 μm. The solid electrolyte membrane may have a suitable thickness considering the ion conductivity, physical strength, energy density of an applicable battery, or the like. For example, in terms of the ion conductivity or energy density, the thickness may be 10 μm or more, 20 μm or more, or 30 μm or more. Meanwhile, in terms of the physical strength, the thickness may be 50 μm or less, 45 μm or less, or 40 μm or less. In addition, while the solid electrolyte membrane has the above-defined range of thickness, it may have a tensile strength of about 100-2,000 kgf/cm². Further, the solid electrolyte membrane may have a porosity of 15 vol% or less, or about 10 vol% or less. Thus, even though the solid electrolyte membrane according to the present disclosure is a thin film, it may have high mechanical strength.

<Positive Electrode and Negative Electrode>

According to the present disclosure, each of the positive electrode and the negative electrode includes a current collector, and an electrode active material layer formed on at least one surface of the current collector, wherein the electrode active material layer includes a plurality of electrode active material particles and a solid electrolyte. If necessary, the electrode may further include at least one of a conductive material and a binder resin. Additionally, the electrode may further include various additives in order to supplement or improve the physical/chemical properties of the electrode.

According to the present disclosure, the negative electrode active material may be any material, as long as it can be used as a negative electrode active material for a lithium-ion secondary battery. Particular examples of the negative electrode active material may include at least one selected from: carbon such as non-graphitizable carbon or graphite-based carbon; metal composite oxides, such as $Li_xFe_2O_3$ ($0 \leq x \leq 1$), $Li_xWO_2$ ($0 \leq x \leq 1$), $Sn_xMe_{1-x}Me'_yO_z$ (Me: Mn, Fe, Pb, Ge; Me': Al, B, P, Si, elements of Group 1, 2 or 3 in the Periodic Table, halogen; $0 < x \leq 1$; $1 \leq y \leq 3$; $1 \leq z \leq 8$); lithium metal; lithium alloy; silicon metal; silicon-based alloy; indium metal; indium alloy; tin-based alloy; metal oxides, such as $SnO$, $SnO_2$, $PbO$, $PbO_2$, $Pb_2O_3$, $Pb_3O_4$, $Sb_2O_3$, $Sb_2O_4$, $Sb_2O_5$, $GeO$, $GeO_2$, $Bi_2O_3$, $Bi_2O_4$ and $Bi_2O_5$; conductive polymers, such as polyacetylene; Li-Co-Ni type materials; and titanium oxide. According to an embodiment of the present disclosure, the negative electrode active material may include a carbonaceous material and/or Si.

In the case of the positive electrode, the electrode active material may be any material with no particular limitation, as long as it can be used as a positive electrode active material for a lithium-ion secondary battery. For example, the positive electrode active material may include: layered compounds, such as lithium cobalt oxide ($LiCoO_2$) and lithium nickel oxide ($LiNiO_2$), or those compounds substituted with one or more transition metals; lithium manganese oxides such as those represented by the chemical formula of $Li_{1+x}Mn_{2-x}O_4$ (wherein x is 0-0.33), $LiMnO_3$, $LiMn_2O_3$ and $LiMnO_2$; lithium copper oxide ($Li_2CuO_2$); vanadium oxides such as $LiV_3O_8$, $LiV_3O_4$, $V_2O_5$ or $Cu_2V_2O_7$; Ni-site type lithium nickel oxides represented by the chemical formula of $LiNi_{1-x}A_xO_2$ (wherein A is Co, Mn, Al, Cu, Fe, Mg, B or Ga, and x is 0.01-0.3); lithium manganese composite oxides represented by the chemical formula of $LiMn_{2-x}A_xO_2$ (wherein A is Co, Ni, Fe, Cr, Zn or Ta, and x is 0.01-0.1) or $Li_2Mn_3AO_8$ (wherein A is Fe, Co, Ni, Cu or Zn); lithium manganese composite oxides having a spinel structure and represented by the formula of $LiNi_xMn_{2-x}O_4$; NCM-based composite oxides represented by the chemical formula of $Li(Ni_aCo_bMn_c)O_2$ (wherein each of a, b and c represents the atomic fraction of an independent element, $0 < a < 1$, $0 < b < 1$, $0 < c < 1$, and $a + b + c = 1$); $LiMn_2O_4$ in which Li is partially substituted with an alkaline earth metal ion; disulfide compounds; $Fe_2(MoO_4)_3$; or the like. However, the scope of the present disclosure is not limited thereto.

According to the present disclosure, the current collector may be selected from the current collectors, such as metal plates, having electrical conductivity and known in the field of secondary batteries, depending on the polarity of the electrode.

According to the present disclosure, the conductive material is added generally in an amount of 1-30 wt% based on the total weight of the mixture including the electrode active material. The conductive material is not particularly limited, as long as it causes no chemical change in the corresponding battery and has conductivity. For example, the conductive material may include any one selected from: graphite, such as natural graphite or artificial graphite; carbon black, such as acetylene black, Ketjen black, channel black, furnace black, lamp black or thermal black; conductive fibers, such as carbon fibers or metallic fibers; carbon fluoride; metal powder, such as aluminum or nickel powder; conductive whisker, such as zinc oxide or potassium titanate; conductive metal oxide, such as titanium oxide; and conductive materials, such as polyphenylene derivatives, or a mixture of two or more of them.

The binder resin is not particularly limited, as long as it is an ingredient which assists binding of the active material with the conductive material, and binding to the current collector. Particular examples of the binder resin may include polyvinylidene fluoride, polyvinyl alcohol, carboxymethyl cellulose (CMC), starch, hydroxypropyl cellulose, regenerated cellulose, polyvinyl pyrrolidone, tetrafluoroethylene, polyethylene, polypropylene, ethylene-propylene-diene monomer terpolymer (EPDM), sulfonated EPDM, styrene butadiene rubber, fluororubber, various copolymers, or the like. In general, the binder resin may be used in an amount of 1-30 wt%, or 1-10 wt%, based on 100 wt% of electrode active material layer.

According to the present disclosure, the electrode active material layer may further include at least one additive, such as an oxidation stabilizing additive, a reduction stabilizing additive, a flame retardant, a heat stabilizer, an anti-fogging agent, or the like.

In still another aspect of the present disclosure, there is provided a secondary battery having the above-described structure. There are also provided a battery module including the secondary battery as a unit cell, a battery pack including the battery module, and a device including the battery pack as a power source. Herein, particular examples of the device may include, but are not limited to: power tools driven by an electric motor; electric cars, including electric vehicles (EVs), hybrid electric vehicles (HEVs), plug-in hybrid electric vehicles (PHEVs), or the like; electric carts, including electric bikes (E-bikes) and electric scooters (E-scooters); electric golf carts; electric power storage systems; or the like.

MODE FOR DISCLOSURE

Examples will be described more fully hereinafter so that the present disclosure can be understood with ease. However, the following examples are for illustrative purposes only and the scope of the present disclosure is not limited thereto.

Example 1

First, as ingredients of the solid electrolyte, used were lithium sulfide ($Li_2S$, available from Mitsuwa Chemical), diphosphorus pentasulfide ($P_2S_5$, available from Aldrich), magnesium sulfide (MgS, available from Japan Pure Chemical), lithium chloride (LiCl, available from Aldrich) and lithium bromide (LiBr, available from Aldrich). The ingredients were weighed and mixed with a mortar in a glove box under argon atmosphere in such a manner that the finally obtained solid electrolyte might have a composition of $Li_{5.4-2y}M_yPS_{4.4}Cl_{1.0}Br_{0.6}$ (substitution degree y = 0.025). In this manner, a mixed powder was obtained. The resultant mixed powder was introduced to a ZrOz pot together with ZrOz balls to provide a sealed pot. The sealed pot is installed in a planetary ball mill device, ball milling was carried out at 380 rpm for 20 hours, and then the pot was opened in the glove box to recover the powder. The resultant powder was placed in a carbon crucible, and then was fired at a firing temperature of 460°C for 8 hours, while allowing argon gas to flow. The fired powder was pulverized with a mortar for 10 minutes to obtain a solid electrolyte.

Examples 2-20

A solid electrolyte was obtained in the same manner as Example 1, except that the Group 2 element (M) was changed, the degree of substitution (y) with the Group 2 element (M) was changed in a range of 0 < y < 0.45, and the firing temperature was changed, as shown in the following Table 1. Instead of magnesium sulfide (MgS, available from Japan Pure Chemical) as an ingredient of the solid electrolyte, used were calcium sulfide (CaS, available from Japan Pure Chemical) when the group 2 element (M) is Ca, strontium sulfide (SrS, available from Japan Pure Chemical) when the group 2 element (M) is Sr, and barium sulfide (BaS, available from Japan Pure Chemical) when the group 2 element (M) is Ba. In Example 20, magnesium sulfide (MgS, available from Japan Pure Chemical) and calcium sulfide (CaS, available from Japan Pure Chemical) were used as ingredients.

Comparative Example 1

A solid electrolyte was obtained in the same manner as Example 1, except that the Group 2 element (M) was changed, the degree of substitution (y) with the Group 2 element (M) was 0.45, and the firing temperature was 430° C, as shown in the following Table 1.

Comparative Example 2

A solid electrolyte was obtained in the same manner as Example 1, except that the Group 2 element (M) was not added, as shown in the following Table 1.

[Table 1]

| Sample | Firing temperature, time (°C), (h) | Designed composition $Li_{5.4-2y}M_yPS_{4.4}Cl_{1.0}Br_{0.6}$ | | Crystalline phase | | Lattice constant a=b=c (A) | Lattice volume (A³) | Half width (°) | Ion conductivity (σ 298K) (mS/cm) |
|---|---|---|---|---|---|---|---|---|---|
| | | M | y | Argyrodite | Impurity | | | | |
| Ex. 1 | 460, 8h | Mg | 0.025 | O | - | 9.8782 | 963.9 | 0.06 | 10.40 |
| Ex. 2 | 460, 8h | Mg | 0.05 | O | - | 9.8713 | 961.9 | 0.06 | 4.34 |
| Ex. 3 | 460, 8h | Mg | 0.075 | O | - | 9.8647 | 960.0 | 0.05 | 9.28 |
| Ex. 4 | 460, 8h | Mg | 0.1 | O | O | 9.8624 | 959.3 | 0.06 | 4.08 |
| Ex. 5 | 460, 8h | Mg | 0.2 | O | O | 9.8651 | 960.1 | 0.06 | 3.88 |
| Ex. 6 | 460, 8h | Ca | 0.00625 | O | - | 9.8709 | 961.8 | 0.06 | 11.20 |
| Ex. 7 | 460, 8h | Ca | 0.0125 | O | - | 9.8741 | 962.7 | 0.06 | 12.03 |
| Ex. 8 | 460, 8h | Ca | 0.025 | O | - | 9.8701 | 961.5 | 0.06 | 13.20 |
| Ex. 9 | 460, 8h | Ca | 0.035 | O | - | 9.8826 | 965.2 | 0.05 | 6.17 |
| Ex. 10 | 460, 8h | Ca | 0.05 | O | - | 9.8732 | 962.4 | 0.05 | 7.24 |
| Ex. 11 | 460, 8h | Ca | 0.075 | O | - | 9.8660 | 960.3 | 0.06 | 10.90 |
| Ex. 12 | 460, 8h | Ca | 0.125 | O | O | 9.8689 | 961.2 | 0.06 | 3.49 |
| Ex. 13 | 460, 8h | Ca | 0.2 | O | O | 9.8703 | 961.6 | 0.07 | 2.14 |
| Ex. 14 | 460, 8h | Sr | 0.075 | O | O | 9.8800 | 964.4 | 0.06 | 4.90 |
| Ex. 15 | 460, 8h | Ba | 0.075 | O | O | 9.8764 | 963.4 | 0.05 | 3.76 |
| Ex. 16 | 490, 8h | Mg | 0.075 | O | O | 9.8730 | 962.4 | 0.06 | 2.19 |
| Ex. 17 | 490, 8h | Ca | 0.075 | O | O | 9.8754 | 963.1 | 0.05 | 3.96 |
| Ex. 18 | 490, 8h | Sr | 0.075 | O | O | 9.8768 | 963.5 | 0.05 | 4.10 |
| Ex. 19 | 490, 8h | Ba | 0.075 | O | O | 9.8756 | 963.1 | 0.05 | 5.24 |
| Ex. 20 | 460, 8h | 1/2 Mg, 1/2 Ca | 0.025 | O | - | 9.8744 | 962.8 | 0.05 | 5.51 |
| Comp. Ex. 1 | 430, 8h | Ca | 0.45 | O | × | 9.8171 | 946.1 | 0.11 | 0.09 |
| Comp. Ex. 2 | 460, 8h | - | - | O | - | 9.9471 | 984.2 | 0.08 | 10.70 |

[Evaluation]

Each solid electrolyte was evaluated as follows.

(XRD Analysis)

Each solid electrolyte was taken in a predetermined amount and introduced to a sealed holder in a glove box under argon gas, and X-ray diffractometry (XRD) was carried out. Herein, XRD was carried out by using an X-ray diffractometer available from Bruker Corp. in a range of $2\theta°$ with $CuK\alpha$ rays having a light source wavelength of 1.5406 Å. Then, the lattice constant, lattice volume and half width were calculated from the resultant XRD (X-ray diffraction) pattern. The half width was calculated from the crystal peak of (311) surface of the argyrodite crystal structure observed at around $2\theta = 30°$, according to the following formula of Scherrer equation:

$$D(\text{Å}) = K * \lambda(\beta * \cos\theta),$$

wherein K is the Scherrer constant, $\lambda$ is a wavelength of X rays, $\beta$ is a half width, $\theta$ is a diffraction angle $2\theta/\theta$, and D is a crystallite size.

(Determination of Ion Conductivity)

Each solid electrolyte was weighed in a predetermined amount and disposed in a MACOR® pipe, and then a pellet-molding jig (upper press pin and lower press pin) was assembled with the MACOR pipe. Then, press molding was carried out under 5 MPa by using a monoaxial press. After that, a predetermined amount of gold powder was applied to both surfaces of the pellets, and press molding was carried out under 7.5 MPa by using a monoaxial press. The resultant MACOR pipe cell was mounted to a jig cell for electrochemical analysis, and pressurization was carried out to 5.0 N·m by using a torque wrench to obtain an ion conductivity test cell. The test cell was connected to an impedance analyzer, and the resistance value of the solid electrolyte pellets was measured at room temperature (298K) under ambient pressure (1 atm) to calculate the ion conductivity (mS/cm) of the solid electrolyte.

(Determination of Initial Charge/Discharge Capacity)

First, an NCM-based positive electrode active material and a solid electrolyte were weighed at a weight ratio of 70:30. Next, 1.5 wt% of carbon black as a conductive material was added thereto, followed by mixing, to obtain a positive electrode mixture. The solid electrolyte obtained as described above was weighed in an amount of 80 mg, installed in a molding jig and subjected to press molding under 6 MPa for 1 minute to obtain solid electrolyte pellets. Then, 10 mg of the positive electrode mixture obtained as mentioned above was disposed on one surface of the solid electrolyte pellets, and the press pin made of SUS in the molding jig was pressed to perform planarization, thereby forming a positive electrode layer. After that, an Al plate was disposed on the resultant positive electrode layer, and press molding was carried out under 30 MPa for 1 minute. Then, Li-Cu foil was disposed on the other surface of the solid pellets, and press molding was carried out under 3 MPa for 30 seconds. The resultant product was combined with the press pin made of SUS to provide a MACOR pipe cell. The resultant MACOR pipe cell was installed in a battery cell, and a torque of 4 N·m was applied thereto to obtain a solid-state battery cell.

The resultant solid-state battery was subjected to a charge/discharge test in a voltage range from 4.25 V to 3.0 V under a charge condition of constant current (CC) (0.05 C)-constant voltage (CV) (0.01 C cut-off) and a discharge condition of CC (0.05 C). Then, the initial charge capacity and initial discharge capacity were obtained from the resultant charge/discharge curve.

[Evaluation Results]

(Crystalline Phase)

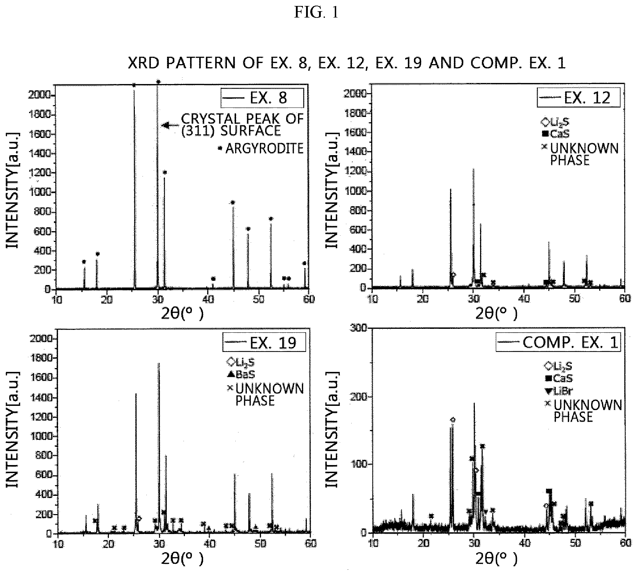

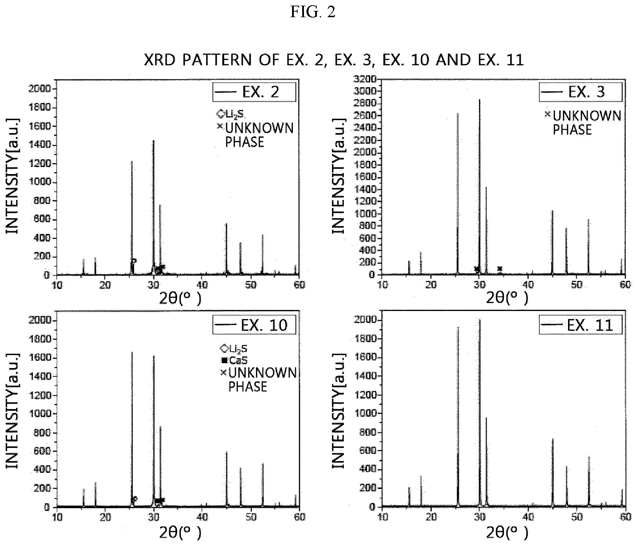

The evaluation results of crystalline phase (crystal structure) identified from the XRD pattern obtained by X-ray diffractometry (XRD) are shown in Table 1. In addition, typical XRD patterns are shown in FIG. 1 and FIG. 2.

As shown in Table 1 and FIG. 1, in Examples 1-3, 6-11 and 20 and Comparative Example 2, substantially no impurity phase (also referred to as 'unknown phase') is observed, and most peaks are derived from argyrodite phase. Particularly, in the case of Example 8 wherein the Group 2 element (M) is Ca and the substitution degree (y) is 0.025, the peak of clear argyrodite phase is observed with no impurity phase observed. Meanwhile, in Examples 4, 5 and 12-19, the peak of argyrodite phase and peaks derived from a trace amount of impurities, such as $Li_2S$, CaS and Bas, other than argyrodite phase are present. In addition, in Comparative Example 1, the peak of argyrodite phase and peaks derived from a large amount of impurities, such as $Li_2S$, CaS and Bas, other than argyrodite phase are present.

FIG. 2 shows the XRD pattern of each of Examples 2, 3, 10 and 11. In Examples 2 and 10 wherein the substitution degree (y) is 0.05, substantially only the peak of argyrodite phase is present, but the peaks derived from impurity phases, such as $Li_2S$ and Cas, and unknown phases are detected. Meanwhile, in Examples 3 and 11 wherein the substitution degree (y) is 0.075, substantially only the peak of argyrodite phase is present.

When the Group 2 element (M) is Mg, an impurity phase is observed at y = 0.1 or more. When the Group 2 element (M) is Ca, an impurity phase is observed at y = 0.125 or more. It can be seen that an impurity phase is formed with ease, as the degree of substitution (y) with the Group 2 element (M) is increased. When the Group 2 element (M) is Sr and Ba, an impurity phase is observed even when the substitution degree (y) is small.

When the degree of substitution (y) is 0.075, and the firing temperature is 460°C, in the case of Mg (Example 3) and Ca (Example 11) having a small ion radius, no impurity phase is observed. However, in the case of Sr (Example 14) and Ba (Example 15) having a large ion radius, an impurity phase is observed. Therefore, it can be seen that an argyrodite crystal structure free from an impurity phase is formed with ease in the case of Mg and Ca having a relatively small ion radius. Particularly, in the case of Ca, no impurity phase is observed, and a solid electrolyte having a clear argyrodite crystal structure is obtained. It is thought that a sulfide-based solid electrolyte having high crystallinity accelerates hopping conduction of lithium ions, and thus contributes to improvement of ion conductivity.

(Lattice Volume)

With reference to the lattice constant derived from the XRD pattern, Examples show a range of 9.8624-9.8826 Å, while the lattice volume is in a range of 959.3-965.2 $Å^3$. Meanwhile, in Comparative Example 1 wherein the degree of substitution (y) with Ca is 0.45, the lattice constant is 9.8171 Å, and the lattice volume is 946.1 $Å^3$. In addition, in Comparative Example 2 wherein the lithium site of sulfide-based solid electrolyte is not substituted with a Group 2 element (M), the lattice constant is 9.9471 Å, and the lattice volume is 984.2 $Å^3$. It is shown that substitution with the lithium site of an argyrodite crystal structure with a Group 2 element (M) causes a decrease in lattice volume of about 1.9-2.5%. Although it is not bound to any specific theory, it is thought that when one of both lithium sites is substituted with a Group 2 element (M) and the other becomes a lithium vacancy, the crystal volume of the sulfide-based solid electrolyte is reduced. It is also thought that the lithium vacancy becomes a path for hopping conduction of lithium ions, and thus contributes to improvement of ion conductivity. In addition, it is thought that the Group 2 element (M) substituting for the lithium site may be a divalent and may further draw the anions around the Group 2 element (M) site, as compared to monovalent lithium ions. It is though that the sulfide-based solid electrolyte has a reduced crystal volume in this manner.

With reference to the half width of the crystal peak of (311) surface of argyrodite crystal structure, Examples show a range of 0.05-0.07°. Meanwhile, Comparative Example 1 shows a half width of 0.11°, and Comparative Example 2 shows a half width of 0.08°. Examples wherein the substitution degree satisfies the condition of 0 < y < 0.45 show a small half width. It is thought that such a small half width contributes to improvement of ion conductivity according to a large crystallite size.

(Ion Conductivity)

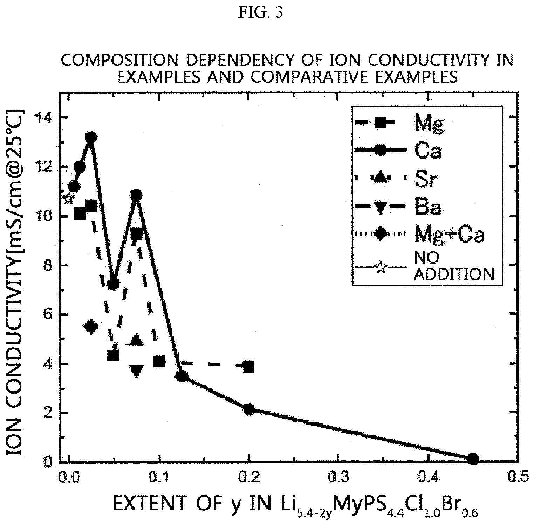

The results of ion conductivity are shown in Table 1. FIG. 3 is a graph plotted by taking the degree of substitution (y) in $Li_{5.4-2y}M_yPS_{4.4}Cl_{1.0}Br_{0.6}$ with a Group 2 element (M) as the transverse axis and taking the ion conductivity determined at 25°C under ambient pressure as the vertical axis. Each point in FIG. 3 corresponds to each of Examples 1-8, 10-15 and 20 and Comparative Examples 1 and 2 (corresponding to 'no addition' in the drawing), and an embodiment wherein y in Example 1 is 0.0125. The embodiment wherein y in Example 1 is 0.0125 shows an ion conductivity of 10.1 mS/cm.

As shown in Table 1, Examples show an ion conductivity of 2.14-13.20 mS/cm. Meanwhile, in Comparative Example 1 wherein the degree of substitution (y) is 0.45, the ion conductivity is 0.09 mS/cm. As such, the ion conductivity of each Example is increased as compared to the ion conductivity of Comparative Example 1. It is thought that the degree of substitution (y) with the group 2 element (M) is excessively large in Comparative Example 1, and thus the crystallinity of argyrodite type crystal structure is lowered to cause a decrease in ion conductivity. In addition, Comparative Example 2 wherein no Group 2 element (M) is added shows an ion conductivity of 10.70 mS/cm.

Particularly, in Examples 6-8 and 11 wherein the Group 2 element (M) is Ca and the degree of substitution (y) satisfies the condition of y < 0.1, the ion conductivity is higher as compared to Comparative Example 2.

Meanwhile, as can be seen from FIG. 3, when the degree of substitution (y) with Mg or Ca is 0.05 (Examples 2 and 10), the ion conductivity is decreased as compared to the adjacent cases wherein y = 0.025 and y = 0.075. Referring to the XRD pattern of FIG. 2, a trace amount of impurity phase (unknown phase) is observed in Examples 2 and 10. For this, it is thought that such a decrease in ion conductivity results from a trace amount of impurities present in the sulfide-based solid electrolyte. Therefore, it is preferred that the sulfide-based solid electrolyte does not include any impurity phase other than argyrodite phase in order to increase the ion conductivity.

Referring to the ion conductivity depending on the type of Group 2 element (M), the ion conductivity is 2.19-10.40 mS/cm, when M = Mg. When M = Ca, the ion conductivity is 2.14-13.20 mS/cm. When M = Sr, the ion conductivity is 4.10-4.90 mS/cm. When M = Ba, the ion conductivity is 3.76-5.24 mS/cm. When M = Mg and Ca, the ion conductivity is 5.51 mS/cm. Therefore, in the case of Examples wherein the Group 2 element (M) is Mg or Ca, the ion conductivity can be increased significantly.

As shown in FIG. 3 and Table 1, when the degree of substitution (y) with Ca is 0.2 or less, the ion conductivity is larger than 2 mS/cm. When the degree of substitution (y) with Ca is less than 0.10 (except the cases wherein y = 0.035 and y = 0.05), the ion conductivity is larger than 10 mS/cm. When the degree of substitution (y) with Ca is less than 0.035, the ion conductivity is larger than 11 mS/cm.

(Battery Characteristics)

When the solid electrolyte according to Example 8 is used for a solid-state battery, the battery could be charged/discharged stably, while lithium metal was used as a negative electrode material. The relative ratio of the capacity of a solid-state battery using the solid electrolyte of Example 8 based on the capacity of a solid-state battery using the solid electrolyte of Comparative Example 2 was 107%, as expressed by a relative ratio based on the initial discharge capacity. In other words, it is possible to improve the initial discharge capacity of a solid-state battery by using the solid electrolyte of Example 8 having high ion conductivity for the solid-state battery.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

**Claims**

1.  A sulfide-based solid electrolyte, which contains a Group 2 element, has an argyrodite-type crystal structure, is represented by the chemical formula of $Li_{7-x-2y}M_yPS_{6-x}Ha_x$ (wherein M represents at least one element selected from Group 2 elements, Ha is at least one element selected from halogen elements, Ha includes Br, and x and y satisfy the conditions of $0 < x < 2.5$ and $0 < y < 0.45$), and has a lattice volume of 950-980 $Å^3$.

2.  The sulfide-based solid electrolyte according to claim 1, wherein y satisfies the condition of $0 < y < 0.1$.

3.  The sulfide-based solid electrolyte according to claim 1 or 2, wherein M is at least one selected from the group consisting of Mg, Ca, Sr and Ba.

4.  The sulfide-based solid electrolyte according to any one of claims 1 to 3, wherein M is Ca.

5.  The sulfide-based solid electrolyte according to any one of claims 1 to 4, which has an ion conductivity of 2 mS/cm or more.

6.  The sulfide-based solid electrolyte according to any one of claims 1 to 5, which does not comprise any impurity phase other than argyrodite phase.

7.  The sulfide-based solid electrolyte according to any one of claims 1 to 6, which has a lattice volume of 958-966 $Å^3$.

8.  A method for preparing the sulfide-based solid electrolyte as defined in any one of claims 1 to 7, comprising the steps of:

    mixing a lithium source, a Group 2 element source, a phosphorus source, a sulfur source and a halogen source to obtain a mixture; and
    firing the mixture under inert atmosphere at a temperature of 250-600°C.

FIG. 1

XRD PATTERN OF EX. 8, EX. 12, EX. 19 AND COMP. EX. 1

FIG. 2

XRD PATTERN OF EX. 2, EX. 3, EX. 10 AND EX. 11

FIG. 3

COMPOSITION DEPENDENCY OF ION CONDUCTIVITY IN EXAMPLES AND COMPARATIVE EXAMPLES

## INTERNATIONAL SEARCH REPORT

| International application No. |
| --- |
| **PCT/KR2022/021443** |

**A.    CLASSIFICATION OF SUBJECT MATTER**

**H01M 10/0562**(2010.01)i; **H01M 10/052**(2010.01)i; **C01B 25/14**(2006.01)i

According to International Patent Classification (IPC) or to both national classification and IPC

**B.    FIELDS SEARCHED**

Minimum documentation searched (classification system followed by classification symbols)

H01M 10/0562(2010.01); C03C 10/16(2006.01); H01B 1/06(2006.01); H01M 10/052(2010.01); H01M 10/0525(2010.01); H01M 4/36(2006.01); H01M 4/38(2006.01); H01M 4/62(2006.01); H01M 6/18(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 아지로다이트 (argyrodite), 고체 전해질 (solid electrolyte), 불활성 가스 (inert gas), 마그네슘 (Mg, magnesium), 브롬 (bromine), 격자 체적 (lattice volume)

**C.    DOCUMENTS CONSIDERED TO BE RELEVANT**

| Category* | Citation of document, with indication, where appropriate, of the relevant passages | Relevant to claim No. |
| --- | --- | --- |
| X | JP 2020-119782 A (GS YUASA CORP.) 06 August 2020 (2020-08-06) See abstract; paragraphs [0010], [0020]-[0021], [0033]-[0034], [0042] and [0092]; and claims 1-5. | 1-3 |
| X | JP 2021-057342 A (SAMSUNG SDI CO., LTD.) 08 April 2021 (2021-04-08) See abstract; paragraphs [0024]-[0028], [0074] and [0081]; and claims 1-4. | 1-3 |
| A | KR 10-2020-0060892 A (IUCF-HYU (INDUSTRY-UNIVERSITY COOPERATION FOUNDATION HANYANG UNIVERSITY)) 02 June 2020 (2020-06-02) See entire document. | 1-3 |
| A | JP 2018-045997 A (IDEMITSU KOSAN CO., LTD.) 22 March 2018 (2018-03-22) See entire document. | 1-3 |
| A | EP 3407412 A1 (BASF SE et al.) 28 November 2018 (2018-11-28) See entire document. | 1-3 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **13 April 2023** | **14 April 2023** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2022/021443** |

| Box No. II | Observations where certain claims were found unsearchable (Continuation of item 2 of first sheet) |
| --- | --- |

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☑ Claims Nos.: **4-8**
   because they are dependent claims and are not drafted in accordance with the second and third sentences of Rule 6.4(a).

Form PCT/ISA/210 (continuation of first sheet) (July 2022)

**INTERNATIONAL SEARCH REPORT**
Information on patent family members

International application No.

**PCT/KR2022/021443**

| Patent document cited in search report | | | Publication date (day/month/year) | Patent family member(s) | | | Publication date (day/month/year) |
|---|---|---|---|---|---|---|---|
| JP | 2020-119782 | A | 06 August 2020 | JP | 7115336 | B2 | 09 August 2022 |
| JP | 2021-057342 | A | 08 April 2021 | CN | 112575380 | A | 30 March 2021 |
| | | | | EP | 3798184 | A1 | 31 March 2021 |
| | | | | KR | 10-2021-0037540 | A | 06 April 2021 |
| | | | | US | 2021-0094824 | A1 | 01 April 2021 |
| KR | 10-2020-0060892 | A | 02 June 2020 | None | | | |
| JP | 2018-045997 | A | 22 March 2018 | JP | 2022-003641 | A | 11 January 2022 |
| | | | | JP | 6945382 | B2 | 06 October 2021 |
| | | | | JP | 7187637 | B2 | 12 December 2022 |
| | | | | US | 10818966 | B2 | 27 October 2020 |
| | | | | US | 2018-0069262 | A1 | 08 March 2018 |
| EP | 3407412 | A1 | 28 November 2018 | EP | 3407412 | B1 | 14 April 2021 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021212766 A
- JP 5873533 B
- JP 2018045997 A
- JP 2018203569 A
- JP 2016027545 A